# EUROPÄISCHE PATENTSCHRIFT

(11) **EP 1 296 832 B1**
(45) Veröffentlichungstag und Bekanntmachung des Hinweises auf die Patenterteilung: **06.12.2006**
(21) Anmeldenummer: 01965052.2
(22) Anmeldetag: 29.06.2001
(51) Int. Cl.: B32B 37/24, B32B 33/00, B32B 7/14, D04H 1/60, E04F 15/20, G10K 11/168

(54) **VERFAHREN ZUR HERSTELLUNG VON VERBUNDELEMENTEN UND VERBUNDELEMENT**
METHOD FOR PRODUCING COMPOSITE ELEMENTS AND COMPOSITE ELEMENT
PROCEDE DE FABRICATION D'ELEMENTS COMPOSITES ET ELEMENT COMPOSITE

(30) Priorität: 03.07.2000 DE 10033322
(43) Veröffentlichungstag der Anmeldung: 02.04.2003
(73) Patentinhaber: HP-Chemie Pelzer Ltd, Waterford (IE)
(72) Erfinder: BOPP, Michael, 58455 Witten (DE)
(74) Vertreter: Pfenning, Meinig & Partner GbR
(86) Internationale Anmeldenummer: PCT/EP2001/007489
(87) Internationale Veröffentlichungsnummer: WO 2002/002325

(56) Entgegenhaltungen:
- EP-A- 0 922 563
- EP-A- 0 942 480
- WO-A-00/27671
- WO-A-98/30375
- DE-A- 3 042 023
- DE-A- 19 722 997
- US-A- 4 111 081
- US-A- 5 493 081
- US-A- 5 993 589

## Beschreibung

Die Erfindung betrifft ein Verfahren zur Herstellung von Verbundelementen nach dem Oberbegriff des Hauptanspruchs und ein Verbundelement entsprechend dem Oberbegriff des nebengeordneten Anspruchs.

Es wird Verbundelemente in Sandwich-Anordnung mit mindestens einem Kern und Deckschichten bekannt. Dabei ist das Kernmaterial auf Basis PUR-Hart-, Halbhart- oder Weichschaum und/oder Polypropylen und/oder expandierbares Polystyrol (EPS) und/oder Styrol-Derivaten (Maleinsäure-Anhydrid-Styrol-Acryl) aufgebaut. Bei thermoplastischen Aufbauten werden Deckschichten aus kompakten Folien durch den Schaumkern zum Sandwich-Element verbunden und werden nach Aufheizen des Verbunden in Formgebungswerkzeugen zu dreidimensionalen Körpern, wie beispielsweise Fertighimmeln im Automobilbau verformt. Die Sandwich-Anordnung aus Kern- und Deckschichten wird entweder durch Mehrlagenextrusion oder durch Laminieren hergestellt. Die dekorativen Deckschichten sind meist nicht faserverstärkt, können jedoch auch durch Applikation von Fasern unterschiedlicher Art (Naturfasern, Glasfasern) in Gegenwart von thermoplastischen Bindemitteln, meist in Form von Pulvern durch Aufsintern dargestellt werden.

Bei der Herstellung von PUR-Sandwich-Aufbauten durch Kaltumformung wird ein Schaumkern aus PUR-Hart- oder Halbhartschaum, der noch in gewissem Maß thermisch verformbar ist, beidseitig mit Deckschichten aus Glasfaser/Thermoplast versehen. Die Deckschichten werden dabei heute fast ausschließlich im on-line-Verfahren durch Aufstreuen von Thermoplastpulvern mit gleichzeitiger Zugabe von geschnetzelten Glasfasern von einem Roving durch ein Schneidwerk auf ein Transportband für die untere Deckschicht und ebenso auf die Schaumkernplatte für die obere Deckschicht aufgebracht. Dieser Verbund wird anschließend in einer kontinuierlichen Heizeinrichtung, zum Beispiel einer Doppelbandheizpresse gesintert, verbunden und anschließend direkt in einem Formwerkzeug, in das auch gleichzeitig ein Textil als Oberflächendekoration eingebracht wird, zu dreidimensionalen Körpern, zum Beispiel Formhimmel für Automobile, verformt. Anschließend wird durch Stanzen, Water-Jet-Schneiden oder dergleichen Verfahren getrimmt und das fertig verbaubare Produkt erhalten. Dieses Produkt ist für normalen Temperatureinsatz bis ca. 105°C geeignet.

In einer anderen Ausführungsform der PUR-Anwendung wird die hohe Klebkraft von PUR-Gemischen zum Verbinden mit den Deckschichten genutzt. Dabei wird ein Gemisch aus PUR-Polyolkomponenten mit Aktivatoren und MDI (44'-Methylendi(phenylisocyanat) auf ein Trägermaterial, zum Beispiel Polyethylenfolie, Papier mit Polyethylen und/oder PUR-Folienabdeckung gesprüht, und Glasfaserschnitzel werden untere und obere Deckschichten aufgegeben. Die dekorative Abdeckung wird meist durch ein Textil mit einer Abdichtungsfolie vorgenommen und der vorbereitete Verbund wird sofort in einem auf ca. 50-80°C vorgeheizten Formwerkzeug verformt und ausgehärtet. Die nach dem Trimmen erhaltenen Produkte sind auch bei erhöhten Temperaturen bis ca. 125°C einsetzbar.

Aus der WO 98/30375 sind Verfahren zur Herstellung von Verbundelementen bekannt, die mindestens einen Kern und zwei Deckschichten aufweisen. Hierbei wird ein Glasfaserkernmaterial sandwichartig zwischen zwei Polymerfasermatten eingebettet. Dieser dreischichtige Verbund wird anschließend mit einem Harz gehärtet.

Aus der EP 0 922 563 A1 sind Verfahren zur Herstellung von Akustik-Bauteilen bekannt, bei denen auf Platten aus einem offenzelligen Melaminharz-Schaumstoff beidseitig dünne, reißfeste Deckschichten aufgebracht werden, die einseitig mit einem Kleber versehen sind. Im Anschluss wird der Verbund in der Wärme verpresst. Hierbei wird der Kleber jedoch in fester Form eingesetzt.

Der Nachteil aller dieser bekannten Verbunde ist die ungenügende akustische Wirkung, da entweder nur geschlossenzellige Kernmaterialien eingesetzt werden oder die Deckschichten durch Abdichtungsmaßnahmen wie bei den zuletzt beschriebenen Ausführungsformen nicht mehr durchlässig sind. Dadurch ist die im Innenraum, von zum Beispielen Automobilen erwünschte absorptive Wirkung zur Reduktion von Luftschall nicht mehr gegeben.

Für akustische Isolationsteile im Motorraum, wie beispielsweise Motorhauben werden heute sogenannte Leichtschäume, PUR-Halbhartschäume mit niedrigem Raumgewicht von 6-20 kg/m³ und Oberflächenvliesen auf Basis Polyethylenterephthalat (PET)/Cellulose/Polyacryl (PA)/C-Polyacrylnitril (C-PAN) und Mischungen aus diesen eingesetzt. Die Oberflächenvliese sind mit Klebebeschichtungen auf Basis Polyethylen (PE) (CoPES/MF (Chemiefasern aus Polyester-Copolymeren/Melaminformaldehyd) versehen und werden in heißen Werkzeugen bei 140-200°C zu Formteilen verarbeitet. Bisher werden hauptsächlich durch Auswahl der Oberflächenvliese im Gebrauch steifere Produkte hergestellt. Der Nachteil ist teures Deckvlies mit reduziertem akustischen Verhalten. Werden Oberflächenvliese mit Einlagen aus Glasfasern, die durch Extrusionsbeschichtung mit Polypropylen hergestellt wurden, eingesetzt, mindern sich ebenso die akustischen Eigenschaften. Außerdem sind derartige Aufbauten nicht bei hohen Temperaturen größer als 100°C stabil genug.

Der Erfindung liegt daher die Aufgabe zugrunde, ein Verfahren zur Herstellung von steifen, leichten Sandwich-Verbundelementen mit tragenden Deckschichten und die Verbundelemente selbst zu schaffen, die auch bei höheren Temperaturen bis 150°C formstabil bleiben und die in bezug auf die Akustik dämmend sind.

Diese Aufgabe wird erfindungsgemäß durch das Verfahren nach dem Hauptanspruch und das Verbundelement des nebengeordneten Anspruchs gelöst.

Dadurch, daß ein aus Fasermaterialien bestehenden offenporiges Halbzeug mit feinkörnigem, pulverförmigen, vernetzenden Harz in der Weise beschichtet wird, daß die Offenporigkeit bestehen bleibt und eine Sandwich-Anordnung, bestehend aus mindestens einem offenporigen Kern und zwei, die Deckschichten bildenden beschichteten Halbzeugen gebildet wird, die in einem auf die Vernetzungstemperatur des pulverförmigen Harzes aufgeheiztes Formwerkzeug zu dem Verbundelement geformt wird, weist dieser Verbund eine große akustische und thermische Isolationswirkung auf, bei gleichzeitiger temperaturstabiler, steifer und leichter Ausbildung und ermöglicht den Einsatz sowohl im Innenraum eines Fahrzeuges als auch für Aufbauten im Motorraum, wie Stirnwände, Motorhaubenabsorber, Getriebetunnel und dergleichen.

Die "Offenporigkeit" wird durch zwei Maßnahmen bzw. Eigenarten der verwendeten Materialien sichergestellt.
1. Die verwendeten Pulvermaterialien sind feinstkörnig und sind nicht oder nur wenig filmbildend.
2. Die verwendeten Faservliese sind feinfaserig und haben eine hohe spezifische Oberfläche.

Durch diese Kombination läßt sich eine Beschichtung von bis zu 200% des eingesetzten Faservlieses erreichen, ohne daß eine geschlossene oder überwiegend geschlossene Schicht entsteht. Es findet überwiegend eine Beschichtung der Fasern und eine Bindung der Fasern an den Kreuzungspunkten statt. Dadurch wird die Festigkeit der Faservliese erreicht und besonders die Schubfestigkeit (Faltung) deutlich verbessert.

Auch während des Herstellungsprozesses der Verbundelemente bleibt es bei dem vorbeschriebenen Zustand, da lediglich ein Aufschmelzen und Vernetzen der pulverförmigen Harzen am Ort der Fixierung am Faservlies stattfindet.

Durch die in den Unteransprüchen angegebenen Maßnahmen sind vorteilhafte Weiterbildungen und Verbesserungen möglich.

Vorzugsweise wird die Deckschicht als beschichtete Halbzeuge getrennt von dem eigentlichen Kern hergestellt. Für die Halbzeuge werden entsprechend dem späteren Verwendungszweck des Verbundelementes unterschiedliche Materialien aus der folgenden Gruppe allein oder in Kombination miteinander gewählt: Glasfaservliese, Glasfasergelege, Endlos- oder Stapelfaser-Glasfasermatten, Synthetikfaservliese aus beispielsweise Polyethylen, Polyamid oder anderen oder anderen, soweit deren Schmelzpunkt höher als 160°C liegen, Naturfaservliese aus Jute, Hanf, Sisal, Flachs, Kenaf, Baumwolle und/oder Metallfasern bzw. Metallfasergewirke oder -gemische.

Die als Halbzeuge ausgebildeten Fasermaterialien werden durch grundsätzlich im Stand der Technik bekannte Verfahren mit einer Pulvermatrix aus einem feinkörnigen, vernetzenden, das heißt reaktiven Harz, versehen, wobei das reaktive Harz durch Vorheizen bei einer Temperatur, die unter der Vernetzungstemperatur liegt, an die Fasern gebunden werden.

Als reaktives Harz können die unterschiedlichsten Materialien eingesetzt werden, beispielsweise Ethylen-Propylen-Copolymere, ungesättigte Polyester, Polyurethane und Kombinationen davon, Reststoffe auf der Pulverlackindustrie auf der Basis von Polyester, Polyamiden, Polyacrylaten, Pulverprodukte auf der Basis von Phenolharz und Kombinationen der zuvor erwähnten Materialien. Diese Harze können als Pulvermischung mit heterogener Zusammensetzung verwendet werden oder sie werden durch Zugabe von Modifikatoren und Beschleunigern, wie Imidazolverbindungen auf den spezifischen Verwendungsfall eingestellt.

Wie schon oben ausgeführt wurde, können unterschiedliche Verfahren der Beschichtung der Fasermaterialien mit der Pulvermatrix vorgesehen werden. In vorteilhafter Weise geschieht das Beschichten nach dem Verfahren der Bindung und Fixierung durch ein filmbildendes Medium. Dabei wird das pulverförmige reaktive Harz mit einem Verdickungsmittel in eine wäßrige Dispersion überführt. Als Verdickungsmitttel zur Herstellung einer wäßrigen Dispersion können zum Beispiel Cetyl-Methyl-Cellulose, Vinyl-AcetatDispersionen, Polyvinylalkohol(PVA)-Lösungen, Stärke, Polysacharide und dergleichen eingesetzt werden. Nach der Beschichtung mit der Dispersion werden die Halbzeuge getrocknet und zwar bei solchen Temperaturen, bei denen die reaktiven Pulverharze noch nicht aktiviert werden und eine vorzeitige Vernetzung unterbleibt. Die beschichteten Halbzeuge stehen dann zur weiteren Verarbeitung zur Verfügung.

Bei einem anderen Beschichtungsverfahren werden die reaktiven Pulverharze auf das Halbzeug aufgestreut und bei entsprechenden Temperaturen angeschmolzen, so daß sich das Harz mit den Fasern verbindet. Für jeweilige Beschichtungsverfahren kann auch ein Schäummittel zugegeben werden. Als Beschichtungsverfahren sind die an sich bekannten Verfahren wie Streichen, Rakeln, Sprühen, Transfer, Pflatschen, Tauchen, Fonlardieren usw. anwendbar.

Die Beschichtungsmenge richtet sich nach der späteren Verwendung und liegt üblicherweise bei 20-200% des Flächengewichtes in g/m² des jeweiligen Halbzeuges aus Fasermaterial.

Eine niedrigere Beschichtungsmenge ergibt eine hohe Luftdurchlässigkeit und eine geringe Steifigkeit, während eine hohe Beschichtungsmenge eine geringere Luftdurchlässigkeit und eine hohe Steifigkeit ergibt.

Durch die Art der verwendeten Fasern bzw. Faservliese oder -matten und die Auswahl des reaktiven Pulverharzes wird ein Netzwerk erzeugt, das einen großen Anteil offener Strukturen hat. Dabei richtet sich die Auswahl nach der späteren Verwendung, Temperaturbeanspruchung, Flammwidrigkeit usw. Damit ist die Luftdurchlässigkeit gewährleistet, die für eine wirkungsvolle Schallabsorption erforderlich ist. Je nach Faserart, Pulverharzart und Beschichtungsmenge kann die Luftdurchlässigkeit so gesteuert werden, daß ein für die spätere Verwendung und Schallreduzierung festgelegter Strömungswiderstand eingestellt werden kann. In bevorzugter Weise können somit den Deckschichten eines Verbundelementes unterschiedliche Strömungswiderstände zugeordnet werden, wenn es dem Anwendungszweck dient.

Als Material für den offenporigen Kern ist beispielsweise ein bei einer Temperatur bis zu 200°C nicht schmelzbares, in seiner Stauchhärte bzw. Druckfestigkeit einstellbares Schaum- oder Fasermaterial verwendbar. Dabei haben sich halbharte, thermisch verformbare PUR-Schäume als besonders geeignet gezeigt. Als Kernmaterial kann aber auch eine aus getränktem oder ungetränktem Papier und/oder gelochtem Aluminium erzeugte Wabenstrukturen verwendet werden. Als weiteres Kernmaterial können auch durch textile Techniken hergestellte Gewirke, die unter dem Begriff Abstandsgewebe bekannt sind, verwendet werden. Auch sind andere Materialien, die, wie die oben beschriebenen Materialien keine geschlossenen Poren besitzen, denkbar und die sich daher zur Schallabsorption eignen.

In vorteilhafte Weise kann für eine thermische Isolation der Aufbau des Kernmaterials durch Einfügen von hochtemperaturbeständigen Materialien, wie Mineralfaservliesen, MF-Schäumen, Silikatfaserpapieren oder - vliesen modifiziert werden.

Zur Herstellung der Verbundelemente werden die beschichteten Halbzeuge als Deckschichten und die offenporigen Kerne in Sandwich-Anordnung gebracht. Die beschichteten Halbzeuge lassen sich in Form von Rollen oder Zuschnitten lagern. Bei ihrer Verarbeitung zu Verbundelementen werden diese beschichteten Halbzeuge einer Verarbeitungsanlage für den lagenweisen Aufbau zugeführt. In dieser Anlage wird das jeweilige Halbzeug mit einer vorbestimmten Menge Wasser durch reine Vernebelung besprüht. Die Menge richtet sich nach Art und Verformungsgrad des Formteils und wird über die im Stand der Technik bekannte Mengenregelung realisiert. Dadurch wird die vorher wenig flexible Matte durchfeuchtet und schmiegsam und läßt sich in weiten Bereichen formgebend verformen. Außerdem wird die durch Bindemittel bzw. Verdickungsmittel hervorgerufene Bindung der Pulverpartikel reduziert und damit eine bessere Benetzung der unterschiedlichen Lagen des Aufbaus erreicht.

Für die Formgebung und Aushärtung wird die Sandwich-Anordnung bestehend aus Kernschicht und oberer und unterer Deckschicht in ein auf Vernetzungstemperatur des jeweiligen Harzes aufgeheiztes Formwerkzeug transportiert. Das Formwerkzeug muß mit dem Formteil entsprechenden Entlüftungen versehen sein, günstigerweise auf beiden Formhälften, damit die während der Aushärtung noch vorhandenen Restfeuchtigkeiten ohne größeren Druckaufbau aus dem Formwerkzeug entweichen können. Zur schnellen Durchheizung des Verbundes kann auch eine Regelung des Druckauf- und abbaus durchgeführt werden und damit eine kürzere Formstandzeit erreicht werden. Zur Vermeidung von Schädigungen am Verbund und/oder an den Anlagenbestandteil muß der Druckabbau vor dem Öffnen des Formwerkzeuges so erfolgen, daß in einem vorbestimmten Zeitintervall der Druck auf Atmosphärendruck reduziert wird.

In einem anderen Formverfahren lassen sich die Verbundelemente auch ohne Vorbefeuchtung der beschichteten Halbzeuge verarbeiten. Dazu wird die Sandwich-Anordnung bzw. der Verbund zunächst auf eine Temperatur, die oberhalb der Schmelztemperatur des jeweilig verwendeten reaktiven Harzes liegt, aufgeheizt und die so aufgeheizten Verbunde werden unmittelbar und schnell in das auf Vernetzungstemperatur des jeweiligen Harzes aufgeheizte Formwerkzeug transportiert. Auch bei dieser Verfahrensweise sind in den Formwerkzeugen Entlüftungen vorzusehen.

Die aus den Formwerkzeugen entnommenen Formteile bzw. Verbundelemente können dann ihrem Anwendungszweck zugeführt werden oder in einem zweiten Arbeitsschritt mit dekorativen Oberflächenschichten versehen werden. Die Verbundelemente sind als Verkleidungsteile im Innenraum von Fahrzeugen, wie zum Beispiel Fertighimmelverkleidungen, anwendbar, wobei sie ausgezeichnete Wärmestandfestigkeit und akustische Eigenschaften aufweisen. Für akustisch wirksame Teile im Motorraum sind die Verbundelemente als biegefeste, sehr leichte und wegen der hohen Eigensteifigkeit mit weniger Befestigungspunkten versehene Teile einsetzbar. Weiterhin sind die Verbundelemente als Motorhauben, motorseitige Stirnwände, Tunnelisolierungen, Motorraumabschottungen, Reserveradmulden bzw. -isolierungen und Tankisolierungen vorgesehen, wobei sowohl eine Geräuschminderung als auch ein thermischer Schutz gegeben ist. Für entflammbare Umgebungen können die Deckschichten auch mit einem Flammschutz in Form von Feststoffen, wie Aluminiumhydroxid, Melaminharzpulver versehen werden, so daß ihre Entflammbarkeit gering ist.

Selbstverständlich können in entsprechender Weise auch mehrere Schichten in unterschiedlicher Reihenfolge für die Verbundelemente vorgesehen werden, wesentlich ist, daß der offenzellige Charakter der gesamten Anordnung auch nach dem Formen und dem Einwirken von Temperaturen zwischen 120-200°C erhalten bleibt.

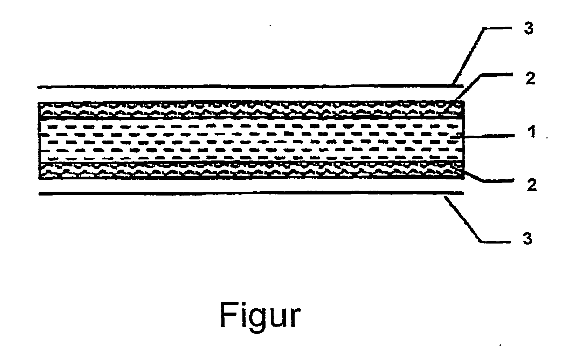

Im folgenden wird ein Beispiel für ein Verbundelement entsprechend der einzigen Figur vorgegeben. Dabei besteht der Sandwich-Aufbau für das Verbundelement aus einem Kern 1 in PUR-Leichtschaum mit 12-15kg/m³, zwei auf jeweils einer Seite des Kerns angeordnete beschichtete Halbzeuge bzw. Deckschichten 2 sowie darauf aufgebrachten Deckvliesen 3. Diese Anordnung dient zur Herstellung für tragfeste und biegestabile Isolationsteile. Die Deckschichten bestehen aus einem beschichteten Glasvlies, zum Beispiel Microlit SAC 50/2 und das Deckvlies ist auf der Basis Viskose/PET mit 45g/m² ausgebildet. Das Glasvlies, das bei der Deckschicht 2 eingesetzt wird, wird auf einer ebenen Unterlage mit einer Beschichtungsmasse durch Aufrollen beschichtet. Die Beschichtungsmenge wird so gewählt, daß maximal 220g/m² der Beschichtung naß aufgebracht und gleichmäßig verteilt werden. Das beschichtete Glasvlies wird anschließend in einer Trokkeneinrichtung solange getrocknet, bis die Feuchtigkeit kleiner 6 Gewichtsprozent unterschreitet. Anschließend können die getrockneten Glasvliese gelagert werden. Unter den üblichen Bedingungen von 20-25°C/50-55% relative Feuchte sind die Glasvliese in Folien verpackt über mehrere Wochen lagerfähig.

Sollte für die Beschichtung ein Spritzverfahren gewählt werden, ist wegen des Feststoffgehaltes ein beidseitiges Auftragen mit jeweils 110-120g/m² erforderlich, da das Glasvlies als "Filter" wirkt. Bei dem Spritzverfahren muß auf eine gleichmäßige Verteilung und einen Naß-in-Naß-Auftrag geachtet werden. Die Trocknung wird in der zuvor beschriebenen Weise durchgeführt.

Zur Herstellung des Verbundes nach der Figur wird auf einen Ablagetisch zunächst eine Lage Deckvlies mit einem Flächengewicht von 30-50g/m² und PE-Besinterung mit der besinterten Seite nach oben abgelegt. Hierauf wird eine Lage des beschichteten Glasvlieses aufgebracht. Das Glasvlies wird bei getrocknetem Zustand leicht durch Sprühen mit feiner Bedüsung befeuchtet. Hierbei soll nur eine leichte, aber gleichmäßige Befeuchtung erfolgen, wobei in der Regel 50-80g/m² Wasser ausreichen. Auf das angefeuchtete Glasvlies wird das PUR-Leichtschaumkernmaterial abgelegt. Dieses wird danach mit einer Lage beschichtetem Glasvlies belegt, das in gleicher Weise angefeuchtet wird, die obere Deckvlies mit der PE-Seite zum Glasvlies aufgelegt. Das so vorbereitete Sandwich-Paket wird in eine Formpresse eingebracht.

Die Formpresse wird bei einer Temperatur von 170°C ± 10°C soweit zugefahren, daß ein leichter Kontakt mit dem Paket erreicht wird. Für 20 Sekunden wird das Paket vorgeheizt und anschließend wird die Presse geschlossen und zunächst 40 Sekunden gepreßt. Danach wird die Presse geöffnet und eventuell erforderliches Deckvlies nach Wahl aufgelegt. Die Presse wird nochmals für 20 Sekunden geschlossen. Nach einer Gesamtpresszeit von 80 Sekunden wird das Formteil auf einer formflüssigen Ablage zum Abkühlen abgelegt.

Der relative Luftströmungswiderstand der erfindungsgemäßen Verbundelemente liegt zwischen 150 und 450 kNs/m⁴.

## Patentansprüche

1. Verfahren zur Herstellung von Verbundelementen, die mindestens einen Kern (1) und zwei Fasern enthaltende Deckschichten (2) aufweisen, mit folgenden Schritten:
- Beschichten von aus Fasermaterialien bestehenden offenporigen Halbzeugen mit feinkörnigem, pulverförmigen, vernetzenden Harz, derart, dass die Offenporigkeit bestehen bleibt, wobei das pulverförmige Harz in eine wässrige Dispersion überführt wird, die auf das Halbzeug in einer die Offenporigkeit der Fasern erhaltenden Menge aufgebracht wird, und dass das mit der Dispersion versehene Halbzeug bei einer solchen Temperatur getrocknet wird, dass das reaktive Harz nicht aktiviert wird,
- Formen einer Anordnung aus mindestens einem offenporigen Kern (1) und zwei beschichteten Halbzeugen in einem auf die Vernetzungstemperatur des pulverförmigen Harzes aufgeheizten Formwerkzeug, wobei abhängig von der Faserart, der Art des pulverförmigen Harzes und/oder der Beschichtungsmenge die Luftdurchlässigkeit des beschichteten Halbzeuges so gesteuert wird, dass ein vorgegebener Strömungswiderstand eingestellt wird,
**dadurch gekennzeichnet, dass** das pulverförmige Harz unter Zuführung von Cetyl-Methyl-Cellulose, Vinyl-Acetatdispersionen, PVA-Lösungen, Stärke oder Polysacchariden als Verdickungsmittel in eine wässrige Dispersion überführt wird.

2. Verfahren nach Anspruch 1, **dadurch gekennzeichnet, dass** das pulverförmige Harz auf das Halbzeug aufgestreut wird, das durch Aufheizen auf eine das reaktive Harz nicht aktivierende Temperatur gebracht wird, bei der das pulverförmige Harz an die Faser gebunden wird.

3. Verfahren nach einem der Ansprüche 1 bis 3, **dadurch gekennzeichnet, dass** das Halbzeug abhängig von der Art der Fasermaterialien mit einer Beschichtungsmenge an pulverförmigen Material von 20-200% des Flächengewichtes in g/m² des Halbzeuges beschichtet wird.

4. Verfahren nach einem der Ansprüche 1 bis 3, **dadurch gekennzeichnet, dass** als Halbzeug Glasfaservliese, Glasfasergelege, Endlos- oder Stapelfaser-Glasfasermatten, Synthetikfaservliese aus PET, PA oder dergleichen mit einem Schmelzpunkt von höher als 160°C, Naturfaservliese aus Jute, Hanf, Sisal, Flachs, Kenaf, Baumwolle oder Metallfasern verwendet werden.

5. Verfahren nach einem der Ansprüche 1 bis 4, **dadurch gekennzeichnet, dass** als pulverförmiges Harz thermoplastische Harze wie Polyesterpolyamide, Polyacrylate oder Mischungen davon sowie Phenole mit und ohne Modifikatoren und Beschleunigern verwendet werden.

6. Verfahren nach einem der Ansprüche 1 bis 5, **dadurch gekennzeichnet, dass** für den Formvorgang der Kern und die beschichteten Halbzeuge in Sandwich-Anordnung übereinander gelegt werden, wobei die beschichteten Halbzeuge angefeuchtet werden und Sandwich-Anordnung in das auf Vernetzungstemperatur des Harzes aufgeheizte Formwerkzeug zu dem Verbundelement geformt wird.

7. Verfahren nach einem der Ansprüche 1 bis 5, **dadurch gekennzeichnet, dass** vor dem Formen die Anordnung aus mindestens einem Kern und zwei beschichteten Halbzeugen auf eine Temperatur oberhalb der Schmelztemperatur des reaktiven Harzes aufgeheizt wird und direkt danach in das aufgeheizte Formwerkzeug eingebracht wird.

8. Verfahren nach einem der Ansprüche 1 bis 7, **dadurch gekennzeichnet, dass** während des Formens das Formwerkzeug entlüftet wird.

9. Verfahren nach einem der Ansprüche 1 bis 8, **dadurch gekennzeichnet, dass** für den Kern ein bei einer Temperatur bis 200°C nicht schmelzbares offenporiges Material, wie ein Schaum- oder Fasermaterial oder aus getränktem oder ungetränktem Papier oder gelochtem Aluminium erzeugte Wabenstrukturen, durch textile Techniken hergestellte Gewirke oder dergleichen verwendet wird.

10. Verfahren nach einem der Ansprüche 1 bis 9, **dadurch gekennzeichnet, dass** mehrere offenporige Kerne mit gegebenenfalls unterschiedlichen Materialien und Eigenschaften unter jeweiliger Zwischenschaltung eines beschichteten Halbzeuges zu einem Verbundelement geformt wird.

11. Verfahren nach einem der Ansprüche 1 bis 10, **dadurch gekennzeichnet, dass** den Deckschichten zur Erzielung eines erhöhten Flammschutzes Feststoffe, wie Aluminiumhydroxid oder Melaminharzpulver zugesetzt werden.

12. Verbundelement mit mindestens einem Kern und zwei Fasern enthaltenden Deckschichten in Sandwich-Lage bei dem der Kern aus einem offenporigen Material und die Deckschichten aus mit einer Beschichtung versehenen, in Form von Halbzeugen vorliegenden Fasermaterialien bestehen, **dadurch gekennzeichnet, dass** die Beschichtung reaktives vernetzendes Harz und Cetyl-Methyl-Cellulose, Vinyl-Azetatdispersionen, PVA-Lösungen, Stärke oder Polysaccharide als Verdickungsmittel aufweist, das in einer solchen Menge aufgebracht ist, dass nach dem Formen zu einem Formteil die Offenporigkeit beibehalten bleibt und das Verbundelement in Abhängigkeit von der Faserart, der Art des pulverförmigen Harzes und/oder der Beschichtungsmenge einen vorgegebenen Strömungswiderstand aufweist, wobei die Beschichtung eine Menge an reaktiven Harz von 20-200% des Flächengewichtes in g/m² aufweist.

13. Verbundelement nach Anspruch 12, **dadurch gekennzeichnet, dass** das reaktive Harz ausgewählt ist aus Polyester, Polyamid, Polyacrylat oder Mischungen davon.

14. Verbundelement nach Anspruch 13, **dadurch gekennzeichnet, dass** das reaktive Harz eine Pulvermatrix aus vernetzendem EP/UP/PUR ist.

15. Verbundelement nach einem der Ansprüche 12 bis 14, **dadurch gekennzeichnet, dass** das Halbzeug als Glasfaservlies, Glasfasergelege, Endlos- oder Stapelfaser-Glasfasermatte, Synthetikfaservlies aus PET, PA oder dergleichen mit einem Schmelzpunkt von höher als 160°C, als Naturfaservlies aus Jute, Hanf, Sisal, Flachs, Kenaf, Baumwolle oder als Metallfasergewirke oder - Vlies ausgebildet ist.

16. Verbundelement nach einem der Ansprüche 12 bis 15, **dadurch gekennzeichnet, dass** der Kern aus einem bei einer Temperatur bis 200°C nicht schmelzbarem offenporigen Material, wie einem Schaum- oder Fasermaterial, oder aus getranktem oder ungetränktem Papier oder gelochtem Aluminium erzeugten Wabenstruktur, oder durch textile Techniken hergestellte Gewirke oder dergleichen besteht.

17. Verbundelement nach Anspruch 16, **dadurch gekennzeichnet, dass** der Kern eingelagerte Mineralfasern, MF-Schaum und/oder Silikatfasern aufweist.

18. Verbundelement nach einem der Ansprüche 12 bis 17, **dadurch gekennzeichnet, dass** die Deckschichten unterschiedliche Eigenschaften, wie unterschiedliche Strömungswiderstände aufweisen.

19. Verbundelement nach einem der Ansprüche 12 bis 18, **dadurch gekennzeichnet, dass** mehrere offenporige Kerne mit gegebenenfalls unterschiedlichen Materialien und Eigenschaften unter jeweiliger Zwischenschaltung eines beschichteten Halbzeuges vorgesehen sind.

20. Verbundelement nach einem der Ansprüche 12 bis 19, **dadurch gekennzeichnet, dass** es einen relativen Luftströmungswiderstand von 150-450 kNs/m⁴ aufweist.

## Claims

1. Method for producing composite elements which have at least one core (1) and cover layers (2) containing two fibres, with the following steps:
- coating of open-pored, semi-finished products comprising fibre materials with fine-grained, pulverulent, cross-linking resin in such a manner that the open porosity remains, the pulverulent resin being converted into an aqueous dispersion and said dispersion being applied onto the semi-finished product in a quantity maintaining the open porosity of the fibres, and that the semi-finished product provided with the dispersion is dried at such a temperature that the reactive resin is not activated,
- forming of an arrangement comprising at least one open-pored core (1) and two coated semi-finished products in a forming tool heated to the cross-linking temperature of the pulverulent resin, in connection with which, according to the fibre type, powder resin type and/or coating quantity, the air permeability of the coated semi-finished product is controlled such that a pre-established flow resistance is set,
**characterised in that** the pulverulent resin is converted into an aqueous dispersion with supply of cetylmethylcellulose, vinyl acetate dispersions, PVA solutions, starch or polysaccharides as thickening agents.

2. Method according to Claim 1, **characterised in that** the pulverulent resin is sprinkled on the semi-finished product which is brought by heating to a temperature not activating the reactive resin and at which the pulverulent resin is bonded to the fibre.

3. Method according to one of Claims 1 to 3, **characterised in that** the semi-finished product, dependent upon the type of fibre materials, is coated with a coating quantity of pulverulent material of 20-200% of the surface weight in g/m² of the semi-finished product.

4. Method according to one of Claims 1 to 3, **characterised in that** there are used as semi-finished product glass fibre webs, glass fibre scrims, continuous or staple fibre glass fibre mats, synthetic fibre webs made of PET, PA or the like with a melting point of higher than 160°C, natural fibre webs made of jute, hemp, sisal, flax, kenaf, cotton or metal fibres.

5. Method according to one of Claims 1 to 4, **characterised in that** there are used as pulverulent resin thermoplastic resins, such as polyester polyamides, polyacrylates or mixtures thereof and phenols with and without modifiers and accelerators.

6. Method according to one of Claims 1 to 5, **characterised in that** the core and the coated semi-finished products are placed one above the other in a sandwich arrangement for the forming process, the coated semi-finished products being moistened and the sandwich arrangement being formed in the forming tool, which is heated to cross-linking temperature of the resin, so as to form the composite element.

7. Method according to one of Claims 1 to 5, **characterised in that** the arrangement comprising at least one core and two coated semi-finished products is heated before forming to a temperature above the melting temperature of the reactive resin and directly thereafter is introduced into the heated forming tool.

8. Method according to one of Claims 1 to 7, **characterised in that** the forming tool is vented during forming.

9. Method according to one of Claims 1 to 8, **characterised in that** an open-pored material which cannot melt at a temperature up to 200°C, such as a foamed or fibre material or honeycomb structures produced from saturated or unsaturated paper or perforated aluminium, knitted materials produced by textile techniques or the like, is used for the core.

10. Method according to one of Claims 1 to 9, **characterised in that** a plurality of open-pored cores with if necessary different materials and properties is formed with respective interposition of a coated semi-finished product so as to form a composite element.

11. Method according to one of Claims 1 to 10, **characterised in that** solid materials, such as aluminium peroxide or melamine resin powder, are added to the cover layers in order to achieve increased flameproofing.

12. Composite element having at least one core and cover layers containing two fibres in a sandwich layer wherein the core comprises an open-pored material and the cover layers comprise fibre materials provided with a coating and present in the form of semi-finished products, **characterised in that** the coating has reactive, cross-linking resin and cetylmethylcellulose, vinyl acetate dispersions, PVA solutions, starch or polysaccharides as thickening agents, which is applied in such a quantity that the open porosity remains after forming into a formed part, and the composite element, according to the fibre type, powder resin type and/or coating quantity, has a pre-established flow resistance, the coating having a quantity of reactive resin of 20-200% of the surface weight in g/m².

13. Composite element according to Claim 12, **characterised in that** the reactive resin is selected from polyester, polyamide, polyacrylate or mixtures thereof.

14. Composite element according to Claim 13, **characterised in that** the reactive resin is a powder matrix of cross-linking EP/UP/PUR.

15. Composite element according to one of Claims 12 to 14, **characterised in that** the semi-finished product is formed as a glass fibre web, glass fibre scrim, continuous or staple fibre glass fibre mat, synthetic fibre web made of PET, PA or the like with a melting point of higher than 160°C, as a natural fibre web made of jute, hemp, sisal, flax, kenaf, cotton or as a metal fibre knitted material or web.

16. Composite element according to one of Claims 12 to 15, **characterised in that** the core comprises an open-pored material which cannot melt at a temperature up to 200°C, such as a foamed or fibre material, or honeycomb structure produced from saturated or unsaturated paper or perforated aluminium, or knitted materials produced by textile techniques or the like.

17. Composite element according to Claim 16, **characterised in that** the core has embedded mineral fibres, MF foam and/or silicate fibres.

18. Composite element according to one of Claims 12 to 17, **characterised in that** the cover layers have different properties, such as different flow resistances.

19. Composite element according to one of Claims 12 to 18, **characterised in that** a plurality of open-pored cores is provided with possibly different materials and properties with respective interposition of a coated semi-finished product.

20. Composite element according to one of Claims 12 to 19, **characterised in that** it has a relative airflow resistance of 150-450 kNs/m⁴.

## Revendications

1. Procédé de fabrication d'éléments composites, qui présentent au moins un noyau (1) et deux couches de recouvrement (2) contenant des fibres, comprenant les étapes suivantes :
- revêtement de produits semi-finis à pores ouverts constitués de matières fibreuses, avec de la résine réticulante pulvérulente de fine granulométrie de sorte que la porosité ouverte subsiste, la résine pulvérulente étant transformée en une dispersion aqueuse qui est déposée sur le produit semi-fini en une quantité maintenant la porosité ouverte des fibres et de sorte que le produit semi-fini doté de la dispersion est séché à une telle température que la résine réactive n'est pas activée,
- formage d'un arrangement constitué d'au moins un noyau à pores ouverts (1) et deux produits semi-finis revêtus dans un outil de formage chauffé à la température de réticulation de la résine pulvérulente, où, en fonction du type de fibre, du type de résine pulvérulente et/ou de la quantité de revêtement, la perméabilité à l'air du produit semi-fini revêtu est ajustée de manière qu'une résistance hydraulique prédéterminée est obtenue,
**caractérisé en ce que** la résine pulvérulente est transformée en une dispersion aqueuse en ajoutant de la cétylméthylcellulose, des dispersions d'acétate de vinyle, des solutions de PVA, de l'amidon ou des polysaccharides comme épaississants.

2. Procédé selon la revendication 1, **caractérisé en ce que** la résine pulvérulente est dispersée sur le produit semi-fini, qui est amené par chauffage à une température n'activant pas la résine réactive, à laquelle la résine pulvérulente est liée aux fibres.

3. Procédé selon l'une des revendications 1 à 3, **caractérisé en ce que** le produit semi-fini est revêtu d'une quantité de revêtement de matière pulvérulente de 20 à 200 % du grammage en g/m² du produit semi-fini, en fonction du type de matières fibreuses.

4. Procédé selon l'une des revendications 1 à 3, **caractérisé en ce que** l'on utilise comme produit semi-fini des voiles de fibres de verre, des tapis de fibres de verre, des mats en fibres de verre à fibres sans fin ou fibres empilées, des voiles de fibres synthétiques en PET, PA ou similaire ayant un point de fusion supérieur à 160°C, des voiles de fibres naturelles en jute, chanvre, sisal, lin, kénaf, coton ou fibres métalliques.

5. Procédé selon l'une des revendications 1 à 4, **caractérisé en ce que** l'on utilise à titre de résine pulvérulente des résines thermoplastiques comme les polyamides de polyester, les polyacrylates ou leurs mélanges ainsi que des phénols avec et sans modificateurs et accélérateurs.

6. Procédé selon l'une des revendications 1 à 5, **caractérisé en ce que**, pour l'opération de formage, le noyau et les produits semi-finis revêtus sont placés l'un sur l'autre en une disposition en sandwich, les produits semi-finis revêtus étant humidifiés et la disposition en sandwich étant formée en l'élément composite dans l'outil de formage chauffé à la température de réticulation de la résine.

7. Procédé selon l'une des revendications 1 à 5, **caractérisé en ce que**, avant le formage, la disposition constituée d'au moins un noyau et de deux produits semi-finis revêtus est chauffée à une température située au dessus de la température de fusion de la résine réactive et est ensuite directement introduite dans l'outil de formage chauffé.

8. Procédé selon l'une des revendications 1 à 7, **caractérisé en ce que**, pendant le formage, l'outil de formage est ventilé.

9. Procédé selon l'une des revendications 1 à 8, **caractérisé en ce que** l'on utilise pour le noyau une matière à pores ouverts non fusible à une température allant jusqu'à 200°C, comme une matière mousseuse ou fibreuse ou des structures en nids d'abeilles fabriquées à partir de papier imbibé ou non imbibé ou d'aluminium perforé, des tricots fabriqués par des techniques textiles ou similaires.

10. Procédé selon l'une des revendications 1 à 9, **caractérisé en ce que** plusieurs noyaux à pores ouverts avec le cas échéant diverses matières et propriétés sont formés en un élément composite, tout en intercalant à chaque fois un produit semi-fini revêtu.

11. Procédé selon l'une des revendications 1 à 10, **caractérisé en ce que** les couches de recouvrement sont additionnées de matières solides telles que l'hydroxyde d'aluminium ou la poudre de résine de mélamine pour obtenir un ignifugeage accru.

12. Elément composite ayant au moins un noyau et deux couches de recouvrement contenant des fibres en couches sandwich, dans lequel le noyau se compose d'une matière à pores ouverts et les couches de recouvrement se composent de matières fibreuses dotées d'un revêtement et se présentant sous la forme de produits semi-finis, **caractérisé en ce que** le revêtement présente de la résine réticulante réactive et de la cétylméthylcellulose, des dispersions d'acétate de vinyle, des solutions de PVA, de l'amidon ou des polysaccharides comme épaississants, qui est déposée en une telle quantité que, après le formage en une pièce moulée, la porosité ouverte demeure et l'élément composite présente une résistance hydraulique prédéterminée, en fonction du type de fibres, du type de résine pulvérulente et/ou de la quantité de revêtement, dans lequel le revêtement présente une quantité de résine réactive de 20 à 200 % du grammage en g/m².

13. Elément composite selon la revendication 12, **caractérisé en ce que** la résine réactive est choisie parmi le polyester, le polyamide, le polyacrylate ou leurs mélanges.

14. Elément composite selon la revendication 13, **caractérisé en ce que** la résine réactive est une matrice de poudre en EP/UP/PUR réticulant.

15. Elément composite selon l'une des revendications 12 à 14, **caractérisé en ce que** le produit semi-fini est conçu sous la forme de voiles de fibres de verre, de tapis de fibres de verre, de mats en fibres de verre à fibres sans fin ou fibres empilées, de voiles de fibres synthétiques en PET, PA ou similaire ayant un point de fusion supérieur à 160°C, de voiles de fibres naturelles en jute, chanvre, sisal, lin, kénaf, coton ou sous la forme de voiles ou fibres métalliques.

16. Elément composite selon l'une des revendications 12 à 15, **caractérisé en ce que** le noyau se compose d'une matière à pores ouverts non fusible à une température allant jusqu'à 200°C, comme une matière mousseuse ou fibreuse ou des structures en nids d'abeilles fabriquées à partir de papier imbibé ou non imbibé ou d'aluminium perforé, des tricots fabriqués par des techniques textiles ou similaires.

17. Elément composite selon la revendication 16, **caractérisé en ce que** le noyau présente des fibres minérales incorporées, de la mousse MF et/ou des fibres de silicate.

18. Elément composite selon l'une des revendications 12 à 17, **caractérisé en ce que** les couches de recouvrement présentent des propriétés différentes, comme des résistances hydrauliques différentes.

19. Elément composite selon l'une des revendications 12 à 18, **caractérisé en ce que** plusieurs noyaux à pores ouverts avec le cas échéant différents matériaux et propriétés sont prévus en intercalant à chaque fois un produit semi-fini revêtu.

20. Elément composite selon l'une des revendications 12 à 19, **caractérisé en ce qu'**il présente une résistance hydraulique relative dans l'air de 150 à 450 kNs/m⁴.
